# EUROPEAN PATENT SPECIFICATION

(11) **EP 4 266 528 B1**
(45) Date of publication and mention of the grant of the patent: **08.10.2025**
(21) Application number: 21905338.6
(22) Date of filing: 02.11.2021
(51) Int. Cl.: H02J 7/00

(54) **FIXING AND SHOCK-ABSORBING PROTECTIVE DEVICE AND CHARGING DEVICE**
FIXIER- UND STOSSDÄMPFUNGSSCHUTZVORRICHTUNG UND LADEVORRICHTUNG
DISPOSITIF DE PROTECTION ABSORBANT LES CHOCS ET DE FIXATION ET DISPOSITIF DE CHARGE

(30) Priority: 17.12.2020 CN 202011494648
(43) Date of publication of application: 25.10.2023
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2021/128047
(87) International publication number: WO 2022/127409

(56) References cited:
- CN-A- 102 927 194
- CN-A- 109 149 506
- CN-A- 112 615 409
- CN-U- 207 131 782
- CN-U- 208 724 266
- CN-U- 210 381 431

## Description

### TECHNICAL FIELD

The present disclosure relates to the technical field of fixing and shock-absorbing protection for movable electric and charging devices, and particularly to a fixing and shock-absorbing protective device and a charging device.

### BACKGROUND

With the advent of the 5G era, more and more movable electric and charging devices are used in modern society. Compared with the fixed electric and charging devices, the movable electric and charging devices are at risk of being dropped and collided during movement. Once dropped or collided, the electric and charging device will suffer functional damage, functional failure, or even serious safety accidents such as on fire. Up to now, there is no technical means to preventively solve the above problem of the electric and charging devices.

Therefore, it is an urgent technical problem to be solved by those skilled in the art to prevent the problem such as functional damage or functional failure of the electric and charging devices.

CN-A-102 927 194 discloses an electrical device damping structure. The electrical device comprises a case and an electric component installed in the case. The electrical device is characterized in that the damping structure comprises a transferring bracket and a plurality of dampers, wherein the transferring bracket is used for installing an electron device, a plurality of damper installation holes are arranged on the transferring bracket, each damper comprises a damper bracket and two number one damping mats, the damper brackets and the number one damping mats are sleeves, one ends of the sleeves are provided with flanging, the number one damping mats are inserted into the damper installation holes from the upper and lower sides of the transferring bracket respectively, the damper brackets are inserted into the number one damping mats from bottom to top, and bolts respectively penetrate through the damper brackets from up to bottom to fix the transferring bracket on the case of the electrical device. The internally and externally combined damping structure enables the electrical device to bear a large explosion impact force.

### SUMMARY

An objective of the present disclosure is to provide a fixing and shock-absorbing protective device and a charging device, which can solve the problem of functional damage or functional failure of an electric or charging device due to being dropped or collided.

In order to solve the above technical problem, the present disclosure provides a fixing and shock-absorbing protective device in accordance with Claim 1. The fixing and shock absorbing device includes a first mounting member provided with a first clamping mechanism for fixation. A deformation amount of the first mounting member after being stressed is 0.015 mm to 9.30 mm.

In the fixing and shock-absorbing protective device according to the present disclosure, the rigid contact of the internal components of the electric or charging device during drop or collision is converted into an elastic buffer contact by means of the first clamping mechanism of the first mounting member, and by means of the accurately limited deformation amount of the first mounting member after being stressed through a series of inventive experiments, so that the stress on the electric or charging device during drop or collision is effectively decreased, the damage probability of the internal electronic component of the electric or charging device is greatly reduced, the normal function of the electric or charging device is well protected, and the electric or charging device is safer during movement. The charging device, the housing, and the fixing and shock-absorbing protective device mounted in the housing according to the present disclosure have the above advantageous effects.

The invention further extends to a charging device as set out in claim 10, comprising a housing and the fixing and shock absorbing protective device of the invention, mounted in the housing.

### BRIEF DESCRIPTION OF THE DRAWINGS

For a clearer illustration of technical features in the embodiments of the present disclosure or the prior art, a brief description of the drawings for the embodiments or the prior art will be given below. Obviously, the drawings described below involve only some embodiments of this disclosure. For those of ordinary skill in the art, other drawings can be derived from these drawings without any inventive efforts.
FIG. 1 illustrates an overall structural diagram according to a specific embodiment of the present disclosure;
FIG. 2 illustrates a top view of a structure illustrated in FIG. 1;
FIG. 3 illustrates a structural diagram of a first mounting member illustrated in FIG. 1.

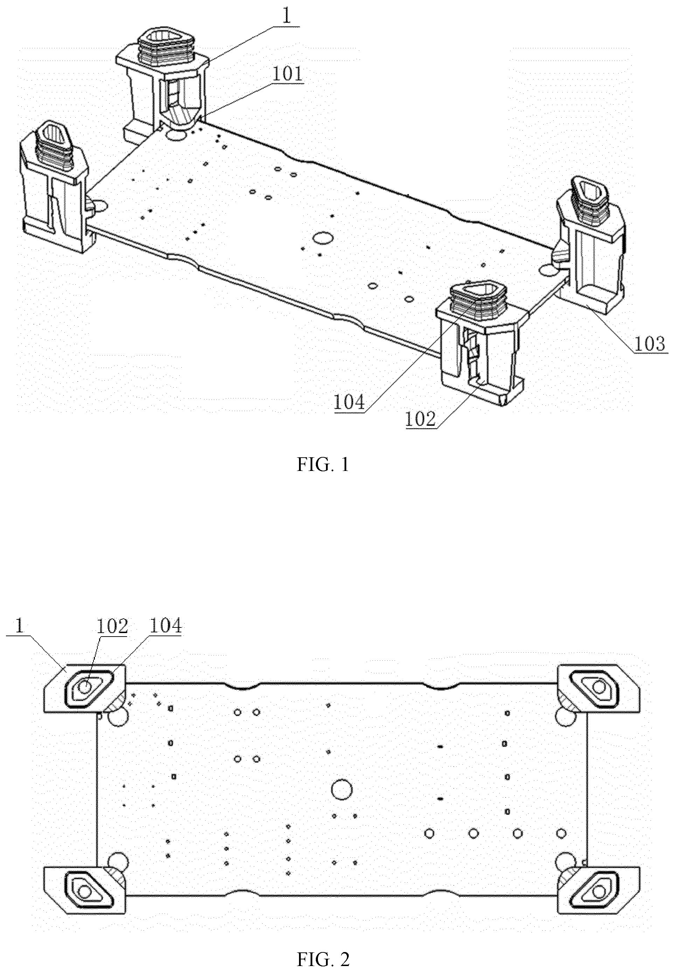

In FIGS. 1 to 3:
1: first mounting member; 101: first clamping mechanism; 102: first mounting hole; 103: bearing seat; 104: buffer structure.

### DETAILED DESCRIPTION

The technical solutions in the embodiments of the present disclosure will be clearly and completely described below with reference to the drawings for the embodiments of the present disclosure. Obviously, the described embodiments are only a part, rather than all, of the embodiments of the present disclosure. All other embodiments derived by persons skilled in the art from the embodiments of the present disclosure without making inventive efforts shall fall within the scope of the present disclosure.

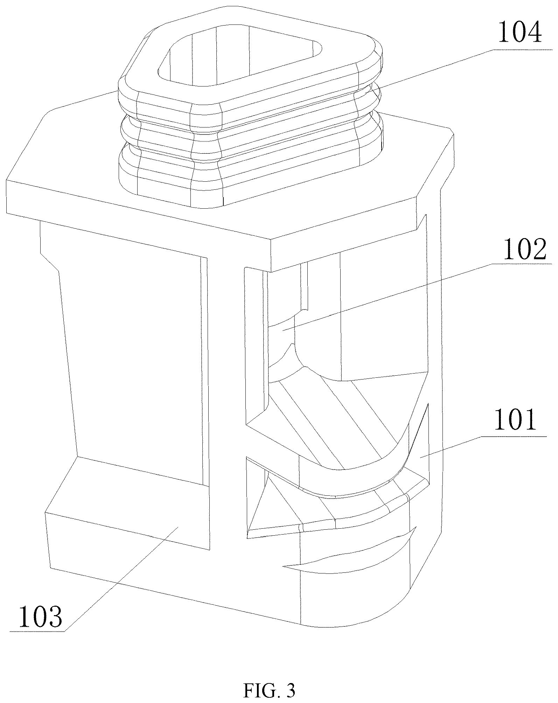

Referring to FIGS. 1 to 3, in which FIG. 1 illustrates an overall structural diagram according to a specific embodiment of the present disclosure, FIG. 2 illustrates a top view of a structure illustrated in FIG. 1, and FIG. 3 illustrates a structural diagram of a first mounting member illustrated in FIG. 1.

According to a specific embodiment of the present disclosure, the fixing and shock-absorbing protective device includes a first mounting member 1, which is provided with a first clamping mechanism 101 for fixing a circuit board and a first mounting hole 102 for mounting a body structure of the first mounting member 1.

The first mounting member 1 is preferably a flexible rubber body, with a preferred deformation amount of 0.015 mm to 9.30 mm. Of course, any other material with a protective performance may also be selected. The first mounting member 1 is provided with a mounting hole, i.e., the first mounting hole 102 of the first mounting member 1 may be fitted with a screw to fix the body structure of the first mounting member 1 with a housing of an electric or charging device. Then, the circuit board is clamped and fixed in the first clamping mechanism 101, so that the circuit board is fixed inside the housing of the electric or charging device. The first mounting member 1 made of flexible rubber can better release and absorb the impact force generated by the deformation of the circuit board itself due to being heated or cooled, so as to better protect the circuit board. Of course, the force acting on the first mounting member 1 is usually the impact caused by the dropping of the charging device during use.

Referring to Table 1, in which drop experiment conditions are as follows: dropped for 100 times at a normal temperature of 25 °C; stored for 30 minutes and dropped for 60 times at a low temperature of -40 °C; stored for 30 minutes and dropped for 80 times at a high temperature of 50 °C; stored for 30 minutes at a low temperature of -40 °C, then transported to be stored for 30 minutes at a high temperature of 50 °C (the transport time is less than 30s), dropped for 10 times, and cycled for 8 times.

**Table 1: Drop Experiment -- Experimental Test of Deformation Amount on Hardware Damage Rate and Functional Failure Rate**

| Drop Experiment (Normal Temperature, High Temperature, Low Temperature, Alternating Temperature)- Experimental Test of Deformation Amount on Hardware Damage Rate and Functional Failure Rate | | | | | | | | | | |
|---|---|---|---|---|---|---|---|---|---|---|
| Item | | | | | | | | | | |
| Deformation Amount | 0 | 0.005 | 0.01 | 0.015 | 0.02 | 0.025 | 0.03 | 0.035 | 0.04 | 0.045 |
| Hardware Damage Rate % | 0.37 | 0.25 | 0.130 | 0.000 | 0.000 | 0.000 | 0.000 | 0.000 | 0.000 | 0.000 |
| Functional Failure Rate % | 0.120 | 0.090 | 0.070 | 0.000 | 0.000 | 0.000 | 0.000 | 0.000 | 0.000 | 0.000 |
| Deformation Amount | 0.050 | 0.055 | 0.060 | 0.065 | 0.070 | 0.075 | 0.080 | 0.085 | 0.090 | 0.095 |
| Hardware Damage Rate % | 0.000 | 0.000 | 0.000 | 0.000 | 0.000 | 0.000 | 0.000 | 0.000 | 0.000 | 0.000 |
| Functional Failure Rate % | 0.000 | 0.000 | 0.000 | 0.000 | 0.000 | 0.000 | 0.000 | 0.000 | 0.000 | 0.000 |
| Deformation Amount | 0.100 | 0.200 | 0.300 | 0.400 | 0.500 | 0.600 | 0.700 | 0.800 | 0.900 | 1.000 |
| Hardware Damage Rate % | 0.000 | 0.000 | 0.000 | 0.000 | 0.000 | 0.000 | 0.000 | 0.000 | 0.000 | 0.000 |
| Functional Failure Rate % | 0.000 | 0.000 | 0.000 | 0.000 | 0.000 | 0.000 | 0.000 | 0.000 | 0.000 | 0.000 |
| Deformation Amount | 1.100 | 1.200 | 1.300 | 1.400 | 1.500 | 1.600 | 1.700 | 1.800 | 1.900 | 2.000 |
| Hardware Damage Rate % | 0.000 | 0.000 | 0.000 | 0.000 | 0.000 | 0.000 | 0.000 | 0.000 | 0.000 | 0.000 |
| Functional Failure Rate % | 0.000 | 0.000 | 0.000 | 0.000 | 0.000 | 0.000 | 0.000 | 0.000 | 0.000 | 0.000 |
| Deformation Amount | 2.200 | 2.400 | 2.600 | 2.800 | 3.000 | 3.200 | 3.400 | 3.600 | 3.800 | 4.000 |
| Hardware Damage Rate % | 0.000 | 0.000 | 0.000 | 0.000 | 0.000 | 0.000 | 0.000 | 0.000 | 0.000 | 0.000 |
| Functional Failure Rate % | 0.000 | 0.000 | 0.000 | 0.000 | 0.000 | 0.000 | 0.000 | 0.000 | 0.000 | 0.000 |
| Deformation Amount | 4.200 | 4.400 | 4.600 | 4.800 | 5.000 | 5.200 | 5.400 | 5.600 | 5.800 | 6.000 |
| Hardware Damage Rate % | 0.000 | 0.000 | 0.000 | 0.000 | 0.000 | 0.000 | 0.000 | 0.000 | 0.000 | 0.000 |
| Functional Failure Rate % | 0.000 | 0.000 | 0.000 | 0.000 | 0.000 | 0.000 | 0.000 | 0.000 | 0.000 | 0.000 |
| Deformation Amount | 6.200 | 6.400 | 6.600 | 6.800 | 7.000 | 7.200 | 7.400 | 7.600 | 7.800 | 8.000 |
| Hardware Damage Rate % | 0.000 | 0.000 | 0.000 | 0.000 | 0.000 | 0.000 | 0.000 | 0.000 | 0.000 | 0.000 |
| Functional Failure Rate % | 0.000 | 0.000 | 0.000 | 0.000 | 0.000 | 0.000 | 0.000 | 0.000 | 0.000 | 0.000 |
| Deformation Amount | 8.100 | 8.200 | 8.300 | 8.400 | 8.500 | 8.600 | 8.700 | 8.800 | 8.900 | 9.000 |
| Hardware Damage Rate % | 0.000 | 0.000 | 0.000 | 0.000 | 0.000 | 0.000 | 0.000 | 0.000 | 0.000 | 0.000 |
| Functional Failure Rate % | 0.000 | 0.000 | 0.000 | 0.000 | 0.000 | 0.000 | 0.000 | 0.000 | 0.000 | 0.000 |
| Deformation Amount | 9.100 | 9.200 | 9.300 | 9.400 | 9.500 | 9.600 | 9.700 | 9.800 | 9.900 | 10.000 |
| Hardware Damage Rate % | 0.000 | 0.000 | 0.000 | 0.110 | 0.210 | 0.290 | 0.330 | 0.420 | 0.530 | 0.840 |
| Functional Failure Rate % | 0.000 | 0.000 | 0.000 | 0.050 | 0.083 | 0.103 | 0.115 | 0.133 | 0.159 | 0.203 |

As can be seen from the above table, through a series of inventive experiments, it is found that when the deformation amount of the first mounting member 1 is less than 0.015 mm, the hardware damage rate is greater than 0.13% and the functional failure rate is greater than 0.070%; when the deformation amount is 0.015 to 9.30 mm, both the hardware damage rate and the functional failure rate are zero; when the deformation amount is greater than 9.30 mm, the hardware damage rate is greater than 0.110%, and the functional failure rate is greater than 0.050%. Along with the continuous increase of the deformation amount, the hardware damage rate and the functional failure rate increase by leaps and bounds, which has a great affection on the performance and life of the product, and in severe cases causes a sharp decrease of the life of the product or even a failure. Therefore, in this embodiment, it is preferable that the deformation amount of the first mounting member 1 ranges from 0.015 mm to 9.30 mm. Compared with the general cognition that the shock-absorbing protection effect improves as the deformation amount after being stressed increases, the present disclosure proves, through the above series of inventive experiments, that it is necessary to limit the range of the deformation amount of the first mounting member 1 to obtain the optimal shock-absorbing protection effect.

Specifically, the first mounting members 1 are placed at corresponding positions of the circuit board, so that the circuit board is entirely clamped through the first mounting holes 102 of the first mounting members 1, so as to form an integral mounted body. The screws are fitted with the first mounting holes 102, respectively, so that the circuit board is mounted and fixed inside the housing of the electric or charging device. Since there is no direct contact between the circuit board and the inner wall or the housing of the electric or charging device, the first mounting member 1 can greatly increase the buffering capacity of the circuit board under an external impact, and better protect the circuit board.

In order to optimize the buffering capacity against the impact force and the fixing stability of the fixed protective device in the above embodiment, a bottom of the first mounting member 1 is provided with a bearing seat 103, which is fixedly connected to the electric or charging device. The first mounting member 1 has an I-shaped support structure and is connected to the bearing seat 103, so as to reduce the impact on the circuit board while making the fixation of the circuit board more stable, thereby better ensuring the working performance of the circuit board.

Further, the first mounting hole 102 is disposed along a height direction of the first mounting member 1, and the first mounting hole 102 is fit with the screw to fix the first mounting member 1 to the electric or charging device.

On this basis, a top of the first mounting member 1 is provided with a buffer structure 104, which abuts against an upper cover of the electric or charging device. When the upper cover of the electric or charging device is subjected to an impact, the impact may be transmitted to the bearing seat 103 by the buffer structure 104 via the body of the first mounting member 1, thereby effectively preventing the circuit board from being damaged and improving the safety performance thereof. Of course, a surface of the first clamping mechanism 101 is provided with a concave-convex structure, which enhances the mounting stability of the first mounting member 1 for fixing the circuit board or other mounted members.

Specifically, the material of the first mounting member 1 at least includes one or more selected from the group consisting of a thermoplastic material, a thermosetting material, a rubber elastomer, and a composite material. Please refer to the prior art for the above materials, which will not be repeated here.

Further, the material of the flexible rubber body includes one or more selected from the group consisting of natural rubber, styrene-butadiene rubber, nitrile rubber, silicone butadiene rubber, isoprene rubber, ethylene-propylene rubber, chloroprene rubber, butyl rubber, fluororubber, polyurethane rubber, polyacrylate rubber, chlorosulfonated polyethylene rubber, epichlorohydrin rubber, chlorinated polyene rubber, chlorosulfide rubber, styrene butadiene rubber, butadiene rubber, hydrogenated Buna-N rubber and polysulfide rubber. Please refer to the prior art for the above materials, which will not be repeated here.

Referring to Table 2, the height of the first mounting member 1 is not greater than 95 mm. Of course, the height of the first mounting member 1 may also be designed according to the internal space size of the box, and is not limited to the above situation.

**Table 2: Experimental Test of Height on Functional Failure Rate**

| Performance | Cushion pads with different heights (mm), 10 pieces for each height | | | | |
|---|---|---|---|---|---|
| Height | 1 | 3 | 5 | 7 | 9 |
| Completion pass rate % | 99.7 | 100 | 100 | 100 | 100 |
| Functional failure rate % | 0 | 0 | 0 | 0 | 0 |
| Height | 11 | 13 | 15 | 17 | 19 |
| Completion pass rate % | 100 | 100 | 100 | 100 | 100 |
| Functional failure rate % | 0 | 0 | 0 | 0 | 0 |
| Height | 21 | 23 | 25 | 27 | 29 |
| Completion pass rate % | 100 | 100 | 100 | 100 | 100 |
| Functional failure rate % | 0 | 0 | 0 | 0 | 0 |
| Height | 31 | 33 | 35 | 37 | 39 |
| Completion pass rate % | 100 | 100 | 100 | 100 | 100 |
| Functional failure rate % | 0 | 0 | 0 | 0 | 0 |
| Height | 41 | 43 | 45 | 47 | 49 |
| Completion pass rate % | 100 | 100 | 100 | 100 | 100 |
| Functional failure rate % | 0 | 0 | 0 | 0 | 0 |
| Height | 51 | 53 | 55 | 57 | 59 |
| Completion pass rate % | 100 | 100 | 100 | 100 | 100 |
| Functional failure rate % | 0 | 0 | 0 | 0 | 0 |
| Height | 61 | 63 | 65 | 67 | 69 |
| Completion pass rate % | 100 | 100 | 100 | 100 | 100 |
| Functional failure rate % | 0 | 0 | 0 | 0 | 0 |
| Height | 71 | 73 | 75 | 77 | 79 |
| Completion pass rate % | 100 | 100 | 100 | 100 | 100 |
| Functional failure rate % | 0 | 0 | 0 | 0 | 0 |
| Height | 81 | 83 | 85 | 87 | 89 |
| Completion pass rate % | 100 | 100 | 100 | 100 | 100 |
| Functional failure rate % | 0 | 0 | 0 | 0 | 0 |
| Height | 90 | 91 | 92 | 93 | 94 |
| Completion pass rate % | 100 | 100 | 100 | 100 | 100 |
| Functional failure rate % | 0 | 0 | 0 | 0 | 0 |
| Height | 95 | 96 | 97 | 98 | 99 |
| Completion pass rate % | 100 | 96.2 | 93.2 | 90.2 | 88.2 |
| Functional failure rate % | 0 | 0.31 | 0.66 | 1.03 | 1.4 |

As can be seen from the above table, through a series of inventive experiments, it is found that when the height is 1 to 95 mm, the functional failure rate is 0, and when the height is greater than 95 mm, the functional failure rate is greater than 0.31%. Along with the continuous increase of the height, the functional failure rate increases by leaps and bounds, which has a great affection on the performance and life of the product, and in severe cases causes a sharp decrease of the life of the product or even a failure. Therefore, in this embodiment, it is preferable that the height of the first mounting member 1 is greater than 0 mm and less than or equal to 95mm.

Referring to Table 3, a ratio of a projection area of the first clamping mechanism 101 along a height direction of the first mounting member 1 to a contact area of a contact region between the first clamping mechanism 101 and a fixed object is not greater than 46, which ensures the clamping stability of the first clamping mechanism 101 while optimizing the mounting space inside the box occupied by the entire first clamping mechanism 101.

**Table 3: Drop Experiment -- Experimental Test of Ratio of Projection Area to Contact Area on Hardware Damage Rate**

| Change of ratio of projection area to contact area | | | | | | |
|---|---|---|---|---|---|---|
| Item | Parameters and statistical data | | | | | |
| Ratio of projection area to contact area | 0 | 2 | 4 | 6 | 8 | 10 |
| Hardware damage failure rate (%) | 0 | 0 | 0 | 0 | 0 | 0 |
| Ratio of projection area to contact area | 12 | 14 | 16 | 18 | 20 | 22 |
| Hardware damage failure rate (%) | 0 | 0 | 0 | 0 | 0 | 0 |
| Ratio of projection area to contact area | 24 | 26 | 28 | 30 | 32 | 34 |
| Hardware damage failure rate (%) | 0 | 0 | 0 | 0 | 0 | 0 |
| Ratio of projection area to contact area | 36 | 38 | 40 | 41 | 42 | 43 |
| Hardware damage failure rate (%) | 0 | 0 | 0 | 0 | 0 | 0 |
| Ratio of projection area to contact area | 44 | 45 | 46 | 47 | 48 | 49 |
| Hardware damage failure rate (%) | 0 | 0 | 0 | 0.13 | 0.41 | 0.96 |

As can be seen from the above table, through a series of inventive experiments, it is found that when the ratio of the projection area of the first clamping mechanism 101 to the contact area with the fixed object is less than 46, the hardware damage failure rate is 0; when the ratio of the projection area of the first clamping mechanism 101 to the contact area with the fixed object is greater than 46, the hardware damage failure rate is greater than 0.13%. Along with the continuous increase of the ratio, the hardware damage failure rate increases by leaps and bounds, which has a great affection on the performance and life of the product. Therefore, in this embodiment, it is preferable that the ratio of the projection area of the first clamping mechanism 101 to the contact area with the fixed object ranges from 0 to 46.

Meanwhile, in order to improve the buffer space between the circuit board and the electric or charging device, the first mounting members 1 are correspondingly mounted at the four corners of the circuit board, respectively, so as to better reduce the impact on the circuit board and make the circuit board be safer.

A specific embodiment of the present disclosure further provides a charging device including the fixing and shock-absorbing protective device. Please refer to the prior art for the structures of other parts of the charging device, which will not be repeated here.

It should be noted that the material of the housing at least includes one or more selected from the group consisting of a thermoplastic material, a thermosetting material, a rubber elastomer, and a composite material. Specifically, the material of the housing includes one or more selected from the group consisting of polyamide, polyethylene, polypropylene, polystyrene, polymethyl methacrylate, polyvinyl chloride, ethylene propylene diene monomer, nylon, polycarbonate, polytetrafluoroethylene, polyethylene glycol terephthalate, polyformaldehyde and polyvinyl chloride. Please refer to the prior art for the above materials, which will not be repeated here.

To sum up, the fixing and shock-absorbing protective device according to the embodiments mainly includes a first mounting member, which is provided with a first clamping mechanism for fixing a circuit board and a first mounting hole for mounting a body structure of the first mounting member. A deformation amount of the first mounting member after being stressed is 0.015 mm to 9.30 mm. In the fixing and shock-absorbing protective device according to the present disclosure, the rigid contact of the internal components of the electric or charging device during drop or collision is converted into an elastic buffer contact by means of the first clamping mechanism of the first mounting member, so that the stress on the electric or charging device during drop or collision is effectively decreased, the damage probability of the internal electronic components of the electric or charging device is greatly reduced, the normal function of the electric or charging device is well protected, and the electric or charging device is safer during movement. The charging device, the housing, and the fixing and shock-absorbing protective device mounted in the housing according to the present disclosure have the above advantageous effects.

The above description of the disclosed embodiments enables those skilled in the art to carry out or use the present disclosure. Many modifications to these embodiments will be obvious to those skilled in the art, and general principles defined herein can be implemented in other embodiments without departing from the scope of the present disclosure which is defined by the accompanying claims.

## Claims

1. A fixing and shock-absorbing protective device, comprising a first mounting member (1) provided with a first clamping mechanism (101) for fixation, wherein a deformation amount of the first mounting member (1) after being stressed is 0.015 mm to 9.30 mm;
the first mounting member (1) is provided with a first mounting hole (102) for mounting a body structure of the first mounting member (1), and the first mounting hole (102) is disposed along a height direction of the first mounting member (1);
the first clamping mechanism (101) has a slot disposed along a lateral direction perpendicular to the height direction, and an opening of the slot is located on an outer side surface of the first mounting member (1), wherein the slot has a width which progressively decreases from the outer side surface of the first mounting member (1) toward the first mounting hole (102); and
a top wall of the slot extends from the first mounting hole (102) to the opening of the slot along a direction inclined toward a bottom wall of the slot.

2. The fixing and shock-absorbing protective device according to claim 1, wherein the first mounting member (1) is a flexible rubber body.

3. The fixing and shock-absorbing protective device according to claim 1, wherein a bearing seat (103) is provided on a bottom of the first mounting member (1), and the first mounting member (1) and the bearing seat (103) are formed as an integral structure, with the first mounting hole (102) penetrating through the bearing seat (103).

4. The fixing and shock-absorbing protective device according to claim 1, wherein a buffer structure (104) is provided on a top of the first mounting member (1), and the buffer structure (104) continuously extends from its end face in the height direction to a top end face of the first mounting member (1);
preferably wherein the buffer structure (104) is provided with grooves on its outer side surface, each of the grooves extending along a circumferential direction of the buffer structure (104).

5. The fixing and shock-absorbing protective device according to claim 1, wherein a surface of the first clamping mechanism (101) is provided with a concave-convex structure.

6. The fixing and shock-absorbing protective device according to claim 1, wherein a height of the first mounting member (1) is not greater than 95 mm.

7. The fixing and shock-absorbing protective device according to claim 1, wherein a material of the first mounting member (1) at least comprises one or more selected from the group consisting of a thermoplastic material, a thermosetting material, a rubber elastomer and a composite material.

8. The fixing and shock-absorbing protective device according to claim 2, wherein a material of the flexible rubber body comprises one or more selected from the group consisting of natural rubber, styrene-butadiene rubber, nitrile rubber, silicone butadiene rubber, isoprene rubber, ethylene-propylene rubber, chloroprene rubber, butyl rubber, fluororubber, polyurethane rubber, polyacrylate rubber, chlorosulfonated polyethylene rubber, epichlorohydrin rubber, chlorinated polyene rubber, chlorosulfide rubber, styrene butadiene rubber, butadiene rubber, hydrogenated Buna-N rubber, and polysulfide rubber.

9. The fixing and shock-absorbing protective device according to claim 1, wherein a ratio of a projection area of the first clamping mechanism (101) along a height direction of the first mounting member (1) to an area of a contact region between the first clamping mechanism (101) and a fixed object is not greater than 46.

10. A charging device, comprising a housing and the fixing and shock-absorbing protective device according to any one of claims 1 to 9 mounted in the housing.

11. The charging device according to claim 10, wherein a material of the housing at least comprises one or more selected from the group consisting of a thermoplastic material, a thermosetting material, a rubber elastomer and a composite material.

12. The charging device according to claim 11, wherein the material of the housing comprises one or more selected from the group consisting of polyamide, polyethylene, polypropylene, polystyrene, polymethyl methacrylate, polyvinyl chloride, ethylene propylene diene monomer, nylon, polycarbonate, polytetrafluoroethylene, polyethylene glycol terephthalate, polyformaldehyde and polyvinyl chloride.

13. The charging device according to claim 10, wherein the charging device further comprises a circuit board mounted inside the housing, and the fixing and shock-absorbing protective device comprises four first mounting members (1) that are mounted at four corners of the circuit board respectively; and
the four corners of the circuit board are respectively clamped and fixed in the slots of the first clamping mechanisms (101) of the four first mounting members (1).

## Patentansprüche

1. Fixier- und Stoßdämpfungsschutzvorrichtung, die ein erstes Montageelement (1) umfasst, das mit einem ersten Klemmmechanismus (101) zur Fixierung versehen ist, wobei eine Verformungsmenge des ersten Montageelements (1) nach Belastung 0,015 mm bis 9,30 mm beträgt;
wobei das erste Montageelement (1) mit einem ersten Montageloch (102) zum Montieren einer Körperstruktur des ersten Montageelements (1) versehen ist, und das erste Montageloch (102) entlang einer Höhenrichtung des ersten Montageelements (1) angeordnet ist;
wobei der erste Klemmmechanismus (101) einen Schlitz aufweist, der entlang einer lateralen Richtung senkrecht zur Höhenrichtung angeordnet ist, und eine Öffnung des Schlitzes an einer Außenseitenfläche des ersten Montageelements (1) positioniert ist, wobei der Schlitz eine Breite aufweist, die von der Außenseitenfläche des ersten Montageelements (1) in Richtung des ersten Montagelochs (102) progressiv abnimmt; und
wobei sich eine obere Wand des Schlitzes von dem ersten Montageloch (102) zur Öffnung des Schlitzes entlang einer Richtung erstreckt, die zu einer unteren Wand des Schlitzes geneigt ist.

2. Fixier- und Stoßdämpfungsschutzvorrichtung nach Anspruch 1, wobei das erste Montageelement (1) ein flexibler Kautschukkörper ist.

3. Fixier- und Stoßdämpfungsschutzvorrichtung nach Anspruch 1, wobei ein Lagersitz (103) an einer Unterseite des ersten Montageelements (1) vorgesehen ist, und das erste Montageelement (1) und der Lagersitz (103) als integrale Struktur gebildet sind, wobei das erste Montageloch (102) den Lagersitz (103) durchdringt.

4. Fixier- und Stoßdämpfungsschutzvorrichtung nach Anspruch 1, wobei eine Pufferstruktur (104) an einer Oberseite des ersten Montageelements (1) vorgesehen ist, und sich die Pufferstruktur (104) kontinuierlich von der Stirnfläche davon in der Höhenrichtung zu einer oberen Stirnfläche des ersten Montageelements (1) erstreckt;
bevorzugt wobei die Pufferstruktur (104) mit Nuten auf ihrer Außenseitenfläche versehen ist, wobei sich jede der Nuten entlang einer Umfangsrichtung der Pufferstruktur (104) erstreckt.

5. Fixier- und Stoßdämpfungsschutzvorrichtung nach Anspruch 1, wobei eine Fläche des ersten Klemmmechanismus (101) mit einer konkav-konvexen Struktur versehen ist.

6. Fixier- und Stoßdämpfungsschutzvorrichtung nach Anspruch 1, wobei eine Höhe des ersten Montageelements (1) nicht mehr als 95 mm beträgt.

7. Fixier- und Stoßdämpfungsschutzvorrichtung nach Anspruch 1, wobei ein Material des ersten Montageelements (1) mindestens eines oder mehr ausgewählt aus der Gruppe umfasst, die aus einem thermoplastischen Material, einem duroplastischen Material, einem Kautschuk-Elastomer und einem Verbundmaterial besteht.

8. Fixier- und Stoßdämpfungsschutzvorrichtung nach Anspruch 2, wobei ein Material des flexiblen Kautschukkörpers eines oder mehr ausgewählt aus der Gruppe umfasst, die aus Naturkautschuk, Styrol-Butadien-Kautschuk, Nitrilkautschuk, Silikon-Butadien-Kautschuk, Isopren-Kautschuk, Ethylen-Propylen-Kautschuk, Chloroprenkautschuk, Butylkautschuk, Fluorkautschuk, Polyurethankautschuk, Polyacrylatkautschuk, chlorsulfoniertem Polyethylenkautschuk, Epichlorhydrinkautschuk, chloriertem Polyenkautschuk, Chlorsulfidkautschuk, Styrol-Butadien-Kautschuk, Butadienkautschuk, hydriertem Buna-N-Kautschuk und Polysulfid-Kautschuk besteht.

9. Fixier- und Stoßdämpfungsschutzvorrichtung nach Anspruch 1, wobei ein Verhältnis einer Projektionsfläche des ersten Klemmmechanismus (101) entlang einer Höhenrichtung des ersten Montageelements (1) zu einer Fläche eines Kontaktbereichs zwischen dem ersten Klemmmechanismus (101) und einem festen Objekt nicht mehr als 46 beträgt.

10. Ladevorrichtung, umfassend ein Gehäuse und die Fixier- und Stoßdämpfungsschutzvorrichtung nach einem der Ansprüche 1 bis 9, die in dem Gehäuse montiert ist.

11. Ladevorrichtung nach Anspruch 10, wobei ein Material des Gehäuses mindestens eines oder mehr ausgewählt aus der Gruppe umfasst, die aus einem thermoplastischen Material, einem duroplastischen Material, einem Kautschuk-Elastomer und einem Verbundmaterial besteht.

12. Ladevorrichtung nach Anspruch 11, wobei das Material des Gehäuses eines oder mehr ausgewählt aus der Gruppe umfasst, die aus Polyamid, Polyethylen, Polypropylen, Polystyrol, Polymethylmethacrylat, Polyvinylchlorid, Ethylenpropylen, Dien-Monomer, Nylon, Polycarbonat, Polytetrafluorethylen, Polyethylenglykolterephthalat, Polyformaldehyd und Polyvinylchlorid besteht.

13. Ladevorrichtung nach Anspruch 10, wobei die Ladevorrichtung ferner eine Leiterplatte umfasst, die innerhalb des Gehäuses montiert ist, und die Fixier- und Stoßdämpfungsschutzvorrichtung vier erste Montageelemente (1) umfasst, die jeweils an vier Ecken der Leiterplatte montiert sind; und
die vier Ecken der Leiterplatte jeweils in den Schlitzen der ersten Klemmmechanismen (101) der vier ersten Montageelemente (1) geklemmt und fixiert sind.

## Revendications

1. Dispositif de fixation et de protection absorbant les chocs, comprenant un premier élément de montage (1) pourvu d'un premier mécanisme de serrage (101) pour une fixation, dans lequel une quantité de déformation du premier élément de montage (1) après mise sous contrainte est comprise entre 0,015 mm et 9,30 mm ;
le premier élément de montage (1) est pourvu d'un premier trou de montage (102) pour monter une structure de corps du premier élément de montage (1), et le premier trou de montage (102) est disposé le long d'une direction de hauteur du premier élément de montage (1) ;
le premier mécanisme de serrage (101) a une fente disposée le long d'une direction latérale perpendiculaire à la direction de hauteur, et une ouverture de la fente est située sur une surface latérale externe du premier élément de montage (1), dans lequel la fente a une largeur qui diminue progressivement depuis la surface latérale externe du premier élément de montage (1) vers le premier trou de montage (102) ; et
une paroi supérieure de la fente s'étend du premier trou de montage (102) à l'ouverture de la fente le long d'une direction inclinée vers une paroi de fond de la fente.

2. Dispositif de fixation et de protection absorbant les chocs selon la revendication 1, dans lequel le premier élément de montage (1) est un corps en caoutchouc flexible.

3. Dispositif de fixation et de protection absorbant les chocs selon la revendication 1, dans lequel un siège de support (103) est disposé sur un fond du premier élément de montage (1), et le premier élément de montage (1) et le siège de support (103) sont formés sous forme d'une structure solidaire, le premier trou de montage (102) pénétrant à travers le siège de support (103).

4. Dispositif de fixation et de protection absorbant les chocs selon la revendication 1, dans lequel une structure tampon (104) est disposée sur une partie supérieure du premier élément de montage (1), et la structure tampon (104) s'étend en continu de sa face d'extrémité dans la direction de hauteur jusqu'à une face d'extrémité supérieure du premier élément de montage (1) ;
de préférence dans lequel la structure tampon (104) est pourvue de rainures sur sa surface latérale externe, chacune des rainures s'étendant le long d'une direction circonférentielle de la structure tampon (104).

5. Dispositif de fixation et de protection absorbant les chocs selon la revendication 1, dans lequel une surface du premier mécanisme de serrage (101) est pourvue d'une structure concavo-convexe.

6. Dispositif de fixation et de protection absorbant les chocs selon la revendication 1, dans lequel une hauteur du premier élément de montage (1) n'est pas supérieure à 95 mm.

7. Dispositif de fixation et de protection absorbant les chocs selon la revendication 1, dans lequel un matériau du premier élément de montage (1) comprend au moins un ou plusieurs matériaux sélectionnés dans le groupe constitué d'un matériau thermoplastique, d'un matériau thermodurcissable, d'un élastomère en caoutchouc et d'un matériau composite.

8. Dispositif de fixation et de protection absorbant les chocs selon la revendication 2, dans lequel un matériau du corps en caoutchouc flexible comprend un ou plusieurs matériaux sélectionnés dans le groupe constitué de caoutchouc naturel, caoutchouc styrène-butadiène, caoutchouc nitrile, caoutchouc butadiène-silicone, caoutchouc isoprène, caoutchouc éthylène-propylène, caoutchouc chloroprène, caoutchouc butyle, fluoro-caoutchouc, caoutchouc polyuréthane, caoutchouc polyacrylate, caoutchouc polyéthylène chlorosulfoné, d caoutchouc épichlorhydrine, caoutchouc polyène chloré, caoutchouc chlorosulfuré, caoutchouc styrène butadiène, caoutchouc butadiène, de caoutchouc Buna-N hydrogéné et de caoutchouc polysulfure.

9. Dispositif de fixation et de protection absorbant les chocs selon la revendication 1, dans lequel un rapport entre une surface de projection du premier mécanisme de serrage (101) le long d'une direction de hauteur du premier élément de montage (1) et une surface d'une région de contact entre le premier mécanisme de serrage (101) et un objet fixé n'est pas supérieur à 46.

10. Dispositif de chargement, comprenant un boîtier et le dispositif de fixation et de protection absorbant les chocs selon l'une quelconque des revendications 1 à 9 monté dans le boîtier.

11. Dispositif de chargement selon la revendication 10, dans lequel un matériau du boîtier comprend au moins un ou plusieurs matériaux sélectionnés dans le groupe constitué d'un matériau thermoplastique, d'un matériau thermodurcissable, d'un élastomère en caoutchouc et d'un matériau composite.

12. Dispositif de chargement selon la revendication 11, dans lequel le matériau du boîtier comprend un ou plusieurs matériaux sélectionnés dans le groupe constitué de polyamide, polyéthylène, polypropylène, polystyrène, polyméthacrylate de méthyle, polychlorure de vinyle, monomère d'éthylène-propylène-diène, nylon, polycarbonate, polytétrafluoroéthylène, polyéthylène glycol téréphtalate, polyformaldéhyde et polychlorure de vinyle.

13. Dispositif de chargement selon la revendication 10, dans lequel le dispositif de chargement comprend en outre une carte de circuit montée à l'intérieur du boîtier, et le dispositif de fixation et de protection absorbant les chocs comprend quatre premiers éléments de montage (1) qui sont montés respectivement aux quatre coins de la carte de circuit ; et
les quatre coins de la carte de circuit sont respectivement serrés et fixés dans les fentes des premiers mécanismes de serrage (101) des quatre premiers éléments de montage (1).
